Europäisches Patentamt

**European Patent Office**

**Office européen des brevets**

(19)

(11) Publication number:

**0 064 358**
**A1**

(12) # EUROPEAN PATENT APPLICATION

(21) Application number: **82302032.6**

(22) Date of filing: **21.04.82**

(51) Int. Cl.³: **F 16 D 7/02**
**F 16 D 41/07, G 01 D 15/24**

(30) Priority: **30.04.81 US 259297**

(43) Date of publication of application:
**10.11.82 Bulletin 82/45**

(84) Designated Contracting States:
**DE FR GB**

(71) Applicant: **HONEYWELL INC.**
**Honeywell Plaza**
**Minneapolis Minnesota 55408(US)**

(72) Inventor: **Teague, Robert H.**
**260 W. 3rd Street**
**Red Hill Pennsylvania 18076(US)**

(74) Representative: **Riddle, John et al,**
**Honeywell Control Systems Ltd. Patent Department**
**Charles Square**
**Bracknell, Berks.(GB)**

(54) Clutch assembly.

(57) A clutch has a first torque transmitting cylindrical surface (6a) and a second torque transmitting cylindrical surface (8, 10, 12) spaced from the first surface and located within a volume defined by the first surface. A continuous coil spring (16) is positioned between the first and the second surfaces with a portion of the outer diameter surface of the spring coils being in contact with the first surface and a portion of the inner diameter surface of the spring coils being in contact with the second surface. The coils of the spring are canted, or inclined at an angle to a line extending radially of the clutch, so that a torque is applied through the clutch from a first driving member (14) connected to the second surface and a driven member (2) connected to the first surface.

FIG.1

EP 0 064 358 A1

CLUTCH ASSEMBLY

The present invention relates to clutch assemblies and more specifically to a rotary motion transmitting clutch.

Traditional designs for providing a clutch function depend on the frictional characteristics of two flat surfaces which are spring loaded against each other to provide the desired frictional torque. The prior art construction typically does not provide stable torques after extended periods of use in the product environment with a resulting malfunction of the clutch. Such a malfunction when the clutch is used in a chart recorder produces a loss of record and servicing downtime.

It is an aim of the invention to provide a clutch assembly of simple construction and improved reliability.

According to the invention, there is provided a clutch assembly comprising an inner race surface, an outer race surface, and means for transmitting a torque therebetween, characterized in that the torque transmitting means includes a continuous coil spring located between said inner and outer race surfaces in simultaneous contact therewith, and in that the coils of the spring are canted.

An embodiment of the present invention will now be described by way of example only, with reference to the accompanying drawings, in which:-

Figure 1 is a cross section of a clutch assembly according to the present invention, and

Figure 2 is a side view of a portion of the clutch assembly shown in Figure 1.

Referring to the drawings, the clutch assembly includes a first clutch torque responsive member in the form of a hollow cylinder 2, which may be a roller for supporting a roll of recording paper in a so-called strip chart recorder. The cylinder 2 is attached at one end thereof to an end cap 3 having an annular portion 4 located within the cylinder and having an annular axial extension 6 forming an outer face member. An inner race member 7, having a pair of peripheral surfaces 8, 10 and an intermediate, or bridging, surface 12 between the surfaces 8, 10, is positioned within the outer race cavity defined by the annular extension 6. The member 7 is integrally connected to an axial drive shaft 14 which may be connected to a drive motor (not shown). A continuous coil spring 16 is located between the inwardly facing surface 6a of the extension 6, i.e., the outer race, and the outwardly facing intermediate surface 12, i.e., the inner race. The surface of the intermediate surface 12 provides a continuous straight line peripheral depression for receiving and axially restraining the spring 16. An axial recess 18 is provided within the inner race member 7 and extends into the drive shaft 14. The recess 18 is dimensioned to accept a centre hub extension 20 of the end cap 3 for aligning the inner race member with the cap 3. The hub 20 has a free running fit within the bore 18. The separation of the inner race formed by the intermediate surface 12 and the outer race formed by the inwardly facing surface of the extension 6 is selected to allow simultaneous contact by the outside surface of the spring 16 with the extension 6 and with the circumferential depression in the surface 12.

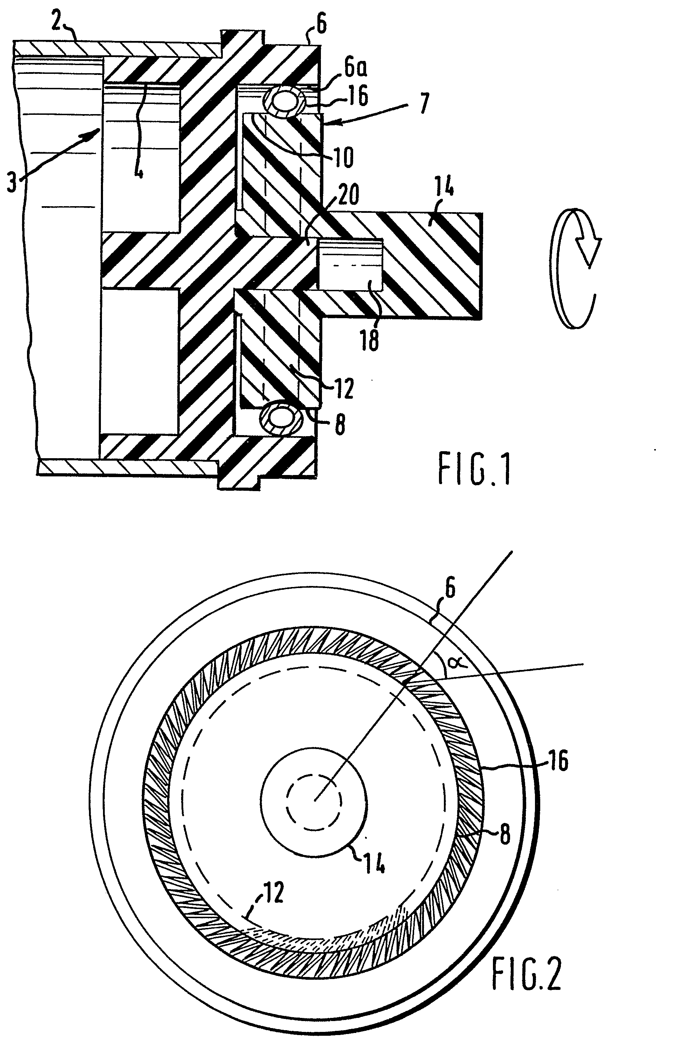

In Figure 2, there is shown an end view of the clutch shown in Figure 1 which illustrates that the coils of the spring 16 are canted between the surface 12 and the inwardly facing surface of the extension 6, that is to say each coil in side view extends at an angle $\alpha$ to a line extending radially of the clutch assembly.

In the above described clutch, it should be noted that the contacting outer surface of the spring 16 is the friction surface, and that a minimal number of parts is provided for ease of assembly and reliable operation. Consistent torque is provided by the clutch device as a result of the plurality of independent frictional surfaces on the spring coils. The net torque through the clutch to provide the torque transmission is a result of the average of the plurality of "micro clutches". The inner and outer diameters of the extension 6 and the surface 12 respectively are not critical because of the low spring rate of the canted coil spring, while the spring dimensions are similarly not critical inasmuch as the characteristic of the canted coil is that with greater deflection the spring rate decreases. The clutch assembly can be configured to provide a substantial slip in either the clockwise or counter clockwise direction suitably selecting the direction of the tilt of the spring coil. Because the spring forces are distributed radially over the full circumference, there is no reaction force at the bearings to contribute extraneous torques.

The clutch shown in the illustrations is capable of several torque control functions. With smooth inside and outside race surfaces, i.e., the facing surfaces of extension 6 and intermediate surface 12, the measured torque transmitted to the extension 16 is greater in the clockwise direction of rotation of the shaft 14 as shown in Figure 2 rather than the counter clockwise direction. This is the result of having the clockwise direction of rotation of the shaft produce an attempted straightening of the tilted coils of the coil spring 16 in a radial direction which produces a greater frictional effect on the races than the counter clockwise rotation which tend to operate in the direction of the coil tilt. With both race surfaces smooth, the slipping normally occurs on the inside race, i.e., the intermediate surface 12, because it has the smaller diameter. If small ribs are provided on the inside and outside race surfaces, the clutch will provide a controlled torque in one direction of rotation of the shaft 14, i.e., slippage, and a locking operation in the opposite direction of rotation. Alternatively, if an external device is provided to lock the spring 16 to the inner race surface 12, the spring 16 will be forced to slip on the outer race surface of the extension 6, thus generating a greater torque of a value that is proportional to the ratio of the inside and outside race diameters. Such a feature would be of value in an applicat-

- 4 -

ion for the rolling of coiled material such as recorder charts, because the chart tension decreases as the rolled diameter increases in the case of a constant torque. With the torque change feature provided by the aforesaid clutch structure, the paper tension would not vary as the chart was rolled resulting in an improved chart transport performance. Suitable materials for the inner and outer surfaces would include various plastics materials such as those known under the Trade Marks Delrin and Nylon, while the spring 16 could advantageously be of stainless steel.

CLAIMS

1.  A clutch assembly comprising an inner race surface (8,10,12), an outer race surface (6a), and means for transmitting a torque therebetween, characterized in that the torque transmitting means includes a continuous coil spring (16) located between said inner and outer race surfaces in simultaneous contact therewith, and in that the coils of the spring are canted.

2.  The clutch assembly of Claim 1, characterized in that the inner race surface includes a continuous peripheral groove (12) receiving the coil spring.

3.  The clutch assembly of Claim 1 or 2, characterized in that the inner and outer race surfaces are smooth.

4.  The clutch assembly of Claim 1 or 2, characterized in that the race surfaces are provided with ribs.

5.  A chart recorder including a clutch assembly according to any one of the preceding claims, the clutch assembly being located in the drive between a driving member and a chart roll.

0064358

1/1

FIG.1

FIG.2

**European Patent Office**

## EUROPEAN SEARCH REPORT

EP 82 30 2032

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 080 733 (CRANKSHAW) <br> *The whole document* | 1-4 | F 16 D 7/02 <br> F 16 D 41/07 <br> G 01 D 15/24 |
| | --- | | |
| Y | GB-A-1 014 113 (ROVER COMPANY) <br> *The whole document* | 1-4 | |
| | --- | | |
| A | US-A-2 385 347 (CHADWELL) <br> *The whole document* | 5 | |
| | --- | | |
| A | GB-A-1 058 810 (FAWICK CORPORATION) <br> *The whole document* | 1,4 | |
| | --- | | |
| A | DE-C- 261 072 (SCHLUTER) <br> *The whole document* | 1,2 | |
| | --- | | TECHNICAL FIELDS SEARCHED (Int. Cl. ³) |
| A | DE-C- 332 137 (BIRKENHAVER) | | |
| | --- | | |
| A | US-A-3 543 895 (KLEES) | | F 16 D 7/00 <br> F 16 D 43/00 <br> F 16 D 41/00 <br> F 16 D 3/00 <br> G 01 D |
| | --- | | |
| A | US-A-2 845 159 (STEPHENSON) | | |
| | ----- | | |

The present search report has been drawn up for all claims

| Place of search | Date of completion of the search | Examiner |
|---|---|---|
| THE HAGUE | 28-07-1982 | BALDWIN D.R. |